# EUROPÄISCHE PATENTSCHRIFT

(11) **EP 0 650 415 B1**
(45) Veröffentlichungstag und Bekanntmachung des Hinweises auf die Patenterteilung: **11.12.1996**
(21) Anmeldenummer: 93906544.7
(22) Anmeldetag: 18.03.1993
(51) Int. Cl.: B60H 3/06, B60H 1/28

(54) **VORRICHTUNG ZUR FRISCHLUFTZUFUHR ZUM FAHRGASTRAUM EINES FAHRZEUGS**
DEVICE FOR SUPPLYING THE INTERIOR OF A MOTOR VEHICLE WITH FRESH AIR
DISPOSITIF PERMETTANT D'ALIMENTER L'HABITACLE D'UN VEHICULE EN AIR FRAIS

(30) Priorität: 21.07.1992 DE 4224051
(43) Veröffentlichungstag der Anmeldung: 03.05.1995
(73) Patentinhaber: Bayerische Motoren Werke Aktiengesellschaft, 80788 München (DE)
(72) Erfinder: HEIL, Michael, D-8015 Markt Schwaben (DE); EDER, Karlheinz, D-8000 München 40 (DE)
(86) Internationale Anmeldenummer: EP9300647
(87) Internationale Veröffentlichungsnummer: WO9402333

(56) Entgegenhaltungen:
- EP-A- 0 410 113
- DE-A- 3 330 951
- FR-A- 2 601 302
- US-A- 3 157 104

## Beschreibung

Die Erfindung bezieht sich auf eine Vorrichtung der im Oberbegriff des ersten Anspruchs angegebenen Art.

Aus der DE-A 39 23 307 ist eine gattungsgemäße Vorrichtung bekannt. Hier wird die Frischluft im Frontbereich des Fahrzeugs angesaugt und über in die Fronthaube integrierte Luftführungskanäle zur Stirnseite geführt. Innerhalb der Fronthaube ist eine Filtereinrichtung vorgesehen, die bei geöffneter Fronthaube und öffnen einer Abdeckklappe zugänglich ist.

Nachteilig bei dieser Anordnung ist es, daß die gesamte Fronthaube zur Luftführung herangezogen wird. Dadurch benötigt diese eine Mindestbauhöhe, die an allen Stellen der Fronthaube nur schwer zu verwirklichen ist.

Aus der US-A 3,157,104 ist eine gattungsgemäße Vorrichtung zur Frischluftzufuhr zum Fahrgastraum eines Fahrzeugs bekannt. Hier wird die Frischluft über zwei getrennt angeordnete Frischlufteinlaßöffnungen zu einem Druckausgleichsraum geführt, von dem sie aus - in zwei Teliströme aufgeteilt - über zwei Filter in einen Luftsammelraum strömt, von dem aus ein Gebläse die gereinigte Frischluft zu Luftauslaßdüsen im Fahrzeuginnenraum leitet. Der Druckausgleichsraum vor den Filtern dient dazu, die eventuell unterschiedlichen Massenströme, die über die beiden Frischluftöffnungen eintreten, zu vergleichmäßigen.

Nachteilig bei dieser Anordnung ist es, daß nicht ausgeschlossen werden kann, daß grober Schmutz und Wasser zu den Filteroberflächen gelangen und diese zusetzen bzw. befeuchten. Dadurch wird der Durchströmwiderstand der Filter sehr schnell steigen, so daß keine ausreichenden Frischluftmengen mehr in den Fahrgastraum gelangen können. Dies ist insbesondere bei feuchtem Wetter störend, da hier besonders die Frontscheibe von innen zum Beschlagen neigt und dann nicht mehr ausreichend abgetrocknet werden kann.

Aufgabe der vorliegenden Erfindung ist es, eine kleinbauende, servicefreundliche und wirkungsvoll arbeitende Frischluftzufuhr mit Filtereinrichtung vorzusehen.

Diese Aufgabe wird erfindungsgemäß durch die kennzeichnenden Merkmale des 1. Anspruchs gelöst. Die Aufteilung des über gemeinsame Frischlufteintrittsöffnungen angesaugten Frischluftstromes auf zwei Filtereinrichtungen verringert den von der Luftführung benötigten Bauraum innerhalb der Fronthaube und gestattet es, den vorhandenen Bauraum optimal zu nutzen, so daß auch ungleich große Filtereinrichtungen verwandt werden können. Ein Druckausgleich findet im gemeinsamen Luftsammelraum vor dem Gebläse statt. Aufgrund dieser Bauanordnung wird die ungereinigte Frischluft in ihrem Strömungsweg mehrmals umgelenkt, so daß grobkörniger Schmutz und Wasser effektiv ausgeschieden werden können. Hierdurch wird sichergestellt, daß die Filteroberflächen frei von Flüssigkeit bleiben, so daß hierdurch der Strömungswiderstand nur langsam - alterungsbedingt - ansteigt.

Um mitgeschleppte Flüssigkeit abzuführen und nicht an die Filter gelangen zu lassen, ist die Weiterbildung nach Anspruch 2 vorteilhaft.

Die Weiterbildung nach Anspruch 3 vereinfacht den konstruktiven Aufwand für die Frischluftführung, indem nicht eine Vielzahl von Führungsblechen vorgesehen werden muß. Vielmehr wird dies durch separate Gehäuse, die in die Filtereinrichtung eingesetzt werden, erzielt.

Je nach Abstand der Fronthaube von dem Stirnwandbereich des Fahrzeugs, in dem sich der Luftsammelraum befindet, ist die Weiterbildung nach Anspruch 4 sinnvoll.

Die Weiterbildung nach Anspruch 5 verhindert, daß bei geöffneter Fronthaube Wasser oder andere Gegenstände in den Luftsammelraum eindringen können. Ein Wassereintritt ist insbesondere dann zu befürchten, wenn es sich bei dem Fahrzeug um ein Fahrzeug mit Frontmotor handelt und eine Motorwäsche vorgenommen wird.

Im folgenden wird die Erfindung anhand eines bevorzugten Ausführungsbeispiels näher erläutert.

Es stellen dar:
- Figur 1:: Einen schematisierten Querschnitt durch den Stirnwandbereich eines Kraftfahrzeuges;
- Figur 2:: Eine Draufsicht auf das fahrgastraumseitige Ende einer Fronthaube.

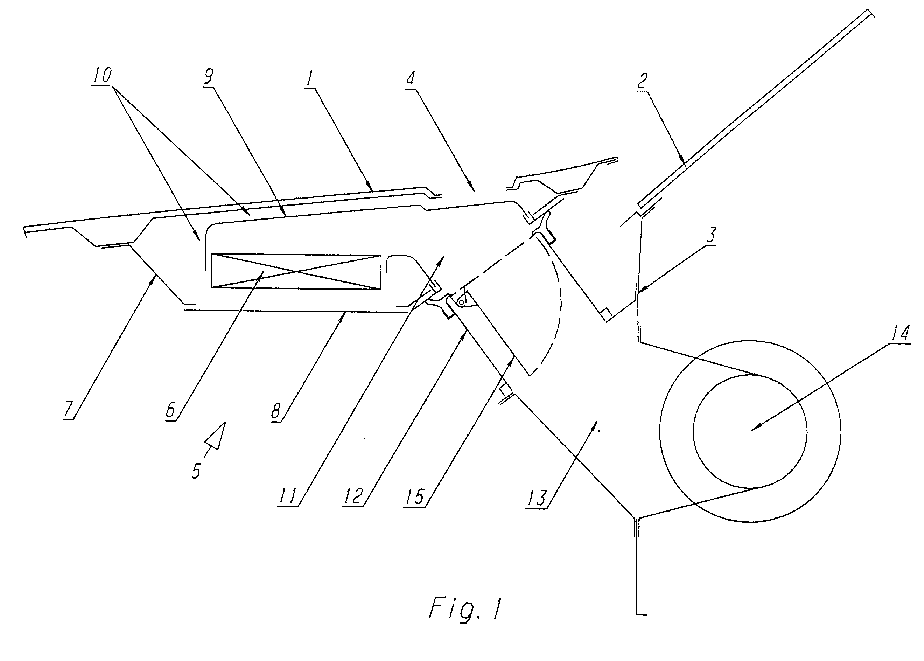

In Figur 1 ist schematisiert der Stirnwandbereich eines Kraftfahrzeuges dargestellt. Im einzelnen ist ein Teil einer Fronthaube 1 sichtbar sowie einer Frontscheibe 2, in deren unteren Bereich eine Stirnwand 3 vorgesehen ist.

Die Fronthaube 1 weist an ihrem fahrgastraumseitigen Ende Lufteintrittsöffnungen 4 auf, um Umgebungsluft zu der Rückseite der Fronthaube zu leiten.

Auf der Rückseite, d. h. auf der der Außenseite der Fronthaube 1 abgewandten Seite, ist eine Filtereinrichtung 5 angebracht. Sie besteht im einzelnen aus zwei Filtern 6, die in einem gemeinsamen wannenförmigen Filtergehäuse 7 angeordnet sind. Das Filtergehäuse 7 ist an der Rückseite der Fronthaube 1 befestigt. Um jeden Filter 6 zu entfernen, ist an dem Filtergehäuse 7 je eine Abdeckklappe 8 vorgesehen.

In dem Filtergehäuse 7 wird jeder Filter 6 an je einem Gehäuse 9 gehalten, das innerhalb des Filtergehäuses 7 an diesem befestigt ist. Dadurch wird innerhalb des Filtergehäuses 7, das den Umgebungsluftbereich begrenzt, der Bereich der gereinigten Luft, also der Luft, die die Filter 6 durchströmt hat, abgetrennt. Jedes Gehäuse 9 ist beabstandet zur Rückseite der Fronthaube 1. Dadurch wird um jedes Gehäuse 9 herum ein Luftführungskanal 10 gebildet, der von den Frischlufteintrittsöffnungen 4 bis zu den Filtern 6 verläuft, die dadurch nahezu liegend am Beginn des Gehäuses 9 angeordnet werden können und von der Luft aufsteigend durchströmt werden. Die angesaugte Frischluft wird also bis zum Eintritt in den Filter dreimal umgelenkt, nämlich zum ersten Mal an der Frischlufteintrittsöffnung 4 und dann zweimal im Luftführungskanal 10. Dadurch wird erreicht, daß schwerere Partikel und vor allem Flüssigkeitstropfen sich aus dem Luftstrom absondern können und aufgrund der Schwerkraft zur tiefsten Stelle des Filtergehäuses 7 gelangen. Dort ist eine nicht weiter dargestellte Öffnung vorhanden, die zum Auslassen des mitgeführten und angesammelten Wassers dient. Diese Öffnung kann von Ventilen gesteuert werden, die einerseits Wasser austreten lassen, andererseits aber verhindern, daß Luft eintreten kann. Dies ist immer dann wichtig, wenn die Öffnung zum Motorraum hin gelegen ist.

Nach dem Durchströmen der Filter 6 wird die gereinigte Luft über den im Gehäuse 9 gebildeten Luftführungskanal 11 zum Luftführungskanal 12 geleitet, der als Verlängerung des Luftführungskanals 11 zur Stirnwand 3 führt. An der Stirnwand 3 oder im Fahrzeuginnenraum ist ein Luftsammelraum 13 gebildet, an dem ein Gebläse 14 angeordnet ist, welches Teil einer nicht näher dargestellten Heiz- und/oder Klimaanlage ist. Der Luftführungskanal 12 ist an dem Luftsammelraum 13 befestigt.

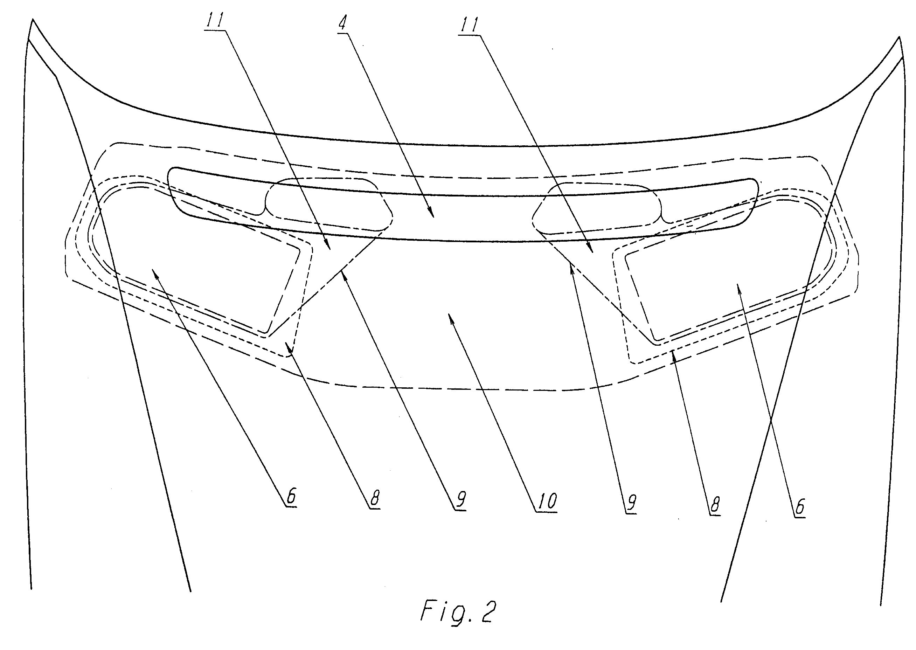

Wie insbesondere aus Figur 2 ersichtlich, verläuft die Lufteintrittsöffnung 4 nahezu über die gesamte Breite der Fronthaube 1. Ebenso verläuft das Filtergehäuse 7 nahezu über die gesamte Breite der Fronthaube 1, um den Filterbereich großräumig zu begrenzen. Darüberhinaus dient ja das Filtergehäuse 7 zur Sammlung und Führung der Frischluft von der Lufteintrittsöffnung 4 zu den beiden Filtern 6.

Ebenfalls gut sichtbar ist in Figur 2, daß zwei Filter 6 vorhanden sind und daß dementsprechend auch zwei Gehäuse 9 vorhanden sind, die die gereinigte Frischluft getrennt zu den beiden nicht näher dargestellten Luftführungskanälen 12 leiten. Erst in dem Luftsammelraum 13 vereinigen sich die beiden gereinigten Luftströme.

Um bei geöffneter Fronthaube zu verhindern, daß Schmutz oder Wasser - beispielsweise bei einer Motorwäsche - in die beiden Luftführungskanäle 12 eintreten kann, sind diese durch je eine Schwenkklappe 15 verschlossen. Geöffnet werden die beiden Schwenkklappen durch nicht näher dargestellte Führungsstifte am Filtergehäuse 7, die beim Schließen der Fronthaube 1 die Schwenkklappen 15 verschwenken und bei geschlossener Fronthaube 1 die Schwenkklappen 15 in der gezeichneten, geöffneten Stellung halten. Um beim Öffnen der Fronthaube 1 in die strichlinierte Schließstellung zu gelangen, sind die Schwenkklappen deshalb federbelastet ausgeführt.

## Patentansprüche

1. Vorrichtung zur Frischluftzufuhr zum Fahrgastraum eines Fahrzeugs mit einer Fronthaube (1), an deren Rückseite eine Filtereinrichtung (5) mit zwei Filtern (6) angebaut ist, die mit einem Luftsammelraum (13) im Stirnwandbereich (3) des Fahrzeugs verbunden ist, aus dem ein Gebläse (14) Luft ansaugt und zu in dem Fahrzeuginnenraum mündenden Luftaustrittsöffnungen fördert, wobei die Frischlufteintrittsöffnungen (4) auf Höhe der Filtereinrichtung (5) in der Fronthaube (1) vorgesehen sind,
dadurch gekennzeichnet, daß der Frischluftstrom nach Passieren der Frischlufteintrittsöffnungen (4) auf zwei Teilströme aufgeteilt wird, daß die Teilströme um die Filter (6) herum geführt werden und diese aufsteigend durchströmen und daß die gereinigte Frischluft aus jedem Filter (6) getrennt in den gemeinsamen Luftsammelraum (13) geleitet wird.

2. Vorrichtung nach Anspruch 1,
dadurch gekennzeichnet, daß die Filtereinrichtung (5) für jedes Filter (6) eine separate Abdeckklappe (8) mit mindestens je einer Wasserauslaßöffnung besitzt.

3. Vorrichtung nach Anspruch 1 oder 2,
dadurch gekennzeichnet, daß die Filter (6) in je einem Gehäuse (9) angeordnet sind, die gleichzeitig zur Führung der gereinigten Frischluft innerhalb der Filtereinrichtung (5) dienen.

4. Vorrichtung nach einem der vorangegangenen Ansprüche,
dadurch gekennzeichnet, daß an der Stirnwand (3) zum Führen der gereinigten Frischluft von der Filtereinrichtung (5) zum Luftsammelraum (13) Führungskanäle (12) vorgesehen sind.

5. Vorrichtung nach einem der vorangegangenen Ansprüche,
dadurch gekennzeichnet, daß die Einlaßöffnungen in die Führungskanäle (12) über Schwenkklappen (15) verschließbar sind, die durch Führungseinrichtungen an der Filtereinrichtung (5) betätigt werden.

## Claims

1. A device for introducing fresh air into the passenger compartment of a vehicle with a front bonnet (1) with a filter device (5) with two filters (6) mounted on its rear side, the said filter device (5) connected to an air collection compartment (13) in the bulkhead region (3) of the vehicle, from which a fan (14) sucks air and blows it to air outlets opening into the passenger compartment of the vehicle, wherein the fresh air inlets (4) are provided at the height of the filter device (5) in the front bonnet (1),
characterised in that the fresh air stream is divided into two part-streams after passing through the fresh air inlets (4) and the part-streams are routed around the filters (6) and flow through them in an ascending manner and that the purified fresh air is channelled separately from each filter (6) into the common air collecting compartment (13).

2. A device according to claim 1,
characterised in that the filter device (5) has a separate cover flap (8) with at least one water discharge opening each for each filter (6).

3. A device according to either claim 1 or claim 2,
characterised in that the filters (6) are each arranged in a housing (9) which at the same time serves to guide the purified fresh air within the filter device (5).

4. A device according to any one of the preceding claims
characterised in that guide ducts (12) are provided on the bulkhead (3) to guide the purified fresh air from the filter device (5) to the air collecting compartment (13).

5. A device according to any one of the preceding claims
characterised in that the inlets in the guide ducts (12) can be closed via swivel flaps (15) which are actuated via guide devices on the filter device (5).

## Revendications

1. Dispositif pour amener de l'air frais à l'habitacle d'un véhicule avec un capot (1), sur le verso duquel est monté un dispositif de filtration (5) avec deux filtres (6) qui est relié à un collecteur d'air (13) dans la zone de la paroi frontale (3) du véhicule, à partir duquel une soufflante (14) aspire l'air et le refoule dans des orifices de sortie d'air qui débouchent dans l'habitacle du véhicule, les orifices d'entrée de l'air frais (4) étant prévus à la hauteur du dispositif de filtration (5) dans le capot (1), dispositif caractérisé en ce que
le flux d'air frais est divisé, après être passé à travers les orifices d'entrée de l'air frais (4), en deux flux partiels, en ce que les flux partiels sont dirigés autour du filtre (6) et passent à travers ceux-ci en montant et en ce que l'air frais purifié est dirigé, à partir de chaque filtre (6) de façon séparée dans le collecteur commun (13).

2. Dispositif selon la revendication 1,
caractérisé en ce que
le dispositif de filtration (5) possède pour chaque filtre (6) un volet séparé de recouvrement (8) avec au moins chacun un orifice d'évacuation de l'eau.

3. Dispositif selon la revendication 1 ou 2,
caractérisé en ce que
les filtres (6) sont disposés dans un boîtier (9), filtres qui servent en même temps à guider l'air frais purifié à l'intérieur du dispositif de filtration (5).

4. Dispositif selon l'une des revendications précédentes,
caractérisé en ce que
sur la paroi frontale (3), sont prévus des canaux de guidage (12) servant à guider l'air frais purifié du dispositif de filtration (5) au collecteur (13).

5. Dispositif selon l'une des revendications précédentes,
caractérisé en ce que
les orifices d'entrée dans les canaux de guidage (12) peuvent être fermés au moyen de volets pivotants (15) qui sont actionnés par des dispositifs de guidage sur le dispositif de filtration (5).
